# FASCICULE DE BREVET EUROPEEN

(11) **EP 2 409 424 B1**
(45) Date de publication et mention de la délivrance du brevet: **16.05.2018**
(21) Numéro de dépôt: 10715943.6
(22) Date de dépôt: 15.03.2010
(51) Int. Cl.: H04B 7/185

(54) **CHARGE UTILE D'UN SATELLITE AVEC AIS**
NUTZLAST FÜR EINEN SATELLITEN MIT AIS
SATELLITE PAYLOAD WITH AIS

(30) Priorité: 17.03.2009 FR 0951674
(43) Date de publication de la demande: 25.01.2012
(73) Titulaire: Centre National d'Etudes Spatiales, 75001 Paris (FR)
(72) Inventeur: LEMAITRE, Julia, 31000 Toulouse (FR); RAIZONVILLE, Philippe, 31400 Toulouse (FR)
(74) Mandataire: Lavoix
(86) Numéro de dépôt international: PCT/FR2010/050461
(87) Numéro de publication internationale: WO 2010/106279

(56) Documents cités:
- WO-A2-2007/143478
- US-A1- 2008 304 597

## Description

L'invention se rapporte à un système à base de satellites défilants superposé à un système de navigation maritime dénommé AIS (en anglais Automatic Identification System) mis en oeuvre au niveau du sol, destiné à la prévention de collisions entre navires et à la surveillance de trajectoires maritimes de navires par des stations locales.

L'invention se rapporte également à un procédé de traitement embarqué des signaux AIS émis depuis le sol et à une charge utile de mise en oeuvre du procédé de traitement embarqué.

Classiquement, des systèmes à base de satellites, défilants selon des orbites basses ou moyennes, et destinés à surveiller la navigation maritime de vaisseaux sur de larges zones d'observation sont connus.

Il est également connu pour de tels systèmes spatiaux d'utiliser les mêmes signaux que ceux du système de navigation maritime AIS tant au niveau de la couche physique qu'aux niveaux de la couche de transport et la couche d'accès selon la classification du modèle OSI (dénomination anglaise de la norme Open Interconnexion Systems). Les différentes couches normalisées des signaux AIS sont décrites dans la recommandation ITU-R M.1371-3.

Ainsi, le document WO 2007/143478 A2 décrit un système à base de satellites défilants permettant la détection et la surveillance de la navigation de vaisseaux maritimes.

Ce système satellitaire utilise les signaux émis par et pour le système maritime au sol AIS en exploitant leurs couches physique, de transport et d'accès définies selon la recommandation ITU-R M.1371-3 précitée et en y intégrant les particularités inhérentes à un canal de transmission mettant en oeuvre la réception par un satellite défilant. Ces particularités concernent notamment les variations fréquentielles dues à des valeurs de dérives Doppler différentes entres divers émetteurs et des variations de retard de propagation entre divers émetteurs.

En particulier les retards de propagation observés en réception au satellite entre des salves émises par des émetteurs dont les instants d'émission sont non coordonnés en raison de l'absence de portée radioélectrique locale de leurs navires associés sont à l'origine de collisions entre salves lors de la réception au niveau du satellite.

Le document WO 2007/143478 A2 décrit une architecture de charge utile dans laquelle un étage classique de réception avec une antenne de type à hélice propre à la réception d'ondes VHF (dénommé en anglais Very High Frequency) et un filtre de réception est suivi par un diviseur de signal en deux branches de traitement, une première branche étant destinée à recevoir un canal de communication d'au moins un terminal de navire et une deuxième branche étant propre à traiter les signaux de type AIS en les démodulant, en extrayant des signaux démodulés des données utiles de surveillance afin de réémettre les données utiles vers une station satellitaire de sol.

Une telle architecture de démodulation embarquée permet d'alléger des tâches de traitement sol et de diminuer le temps de détection par le système d'une collision éventuelle entre navires mais elle est inefficace lorsque le satellite survole des zones à forte densité de navires du fait de l'augmentation du taux de collisions entre salves, émises par des navires différents, hors de portée radioélectrique entre eux, avec des instants d'émission non coordonnés.

On connait également US 2008/304597 A1 décrivant une charge utile destinée à la surveillance de trajectoires maritimes de navires. Cette charge est également apte à recevoir des signaux de type AIS.

Le problème technique est d'améliorer l'efficacité de la démodulation des salves AIS autant en termes d'un taux élevé de succès de la démodulation indépendant de la zone de trafic survolée que de rapidité d'accès des stations locales de surveillance à des données utiles AIS.

A cet effet, l'invention a pour objet une charge utile de satellite conforme à la revendication 1.

Suivant des modes particuliers de réalisation, la charge utile comporte l'une ou plusieurs des caractéristiques des revendication 2 à 18.

L'invention a également pour objet un système de satellites conforme à la revendication 19.

L'invention a également pour objet un procédé de traitement conforme à la revendication 20.

Suivant des modes particuliers de réalisation, le procédé de traitement comporte l'une ou plusieurs des caractéristiques des revendications 21 à 22.

L'invention sera mieux comprise à la lecture de la description de deux formes de réalisation qui vont suivre, donnée uniquement à titre d'exemple et faite en se référant aux dessins sur lesquels :
- la figure 1 est une vue d'une première forme de réalisation d'un système de satellites selon l'invention,
- la figure 2 est une vue de la trame d'un message AIS utilisé par le système décrit à la figure 1,
- la figure 3 est une vue de l'architecture générique de la charge utile d'un satellite du système décrit à la figure 1,
- la figure 4 est une vue d'un exemple de réalisation de l'architecture générique de charge utile de la figure 3,
- la figure 5 est un ordinogramme du procédé de traitement embarqué mis en oeuvre par la charge utile des figures 3 et 4, et le système satellite décrit à la figure 1,
- la figure 6 est un ordinogramme d'une variante du procédé décrit à la figure 5.
- la figure 7 est une vue d'une deuxième forme de réalisation d'un système de satellites selon l'invention,
- la figure 8 est une vue de l'architecture générique de la charge utile d'un satellite du système décrit à la figure 7,
- la figure 9 est une vue d'un exemple de réalisation de l'architecture générique de charge utile de la figure 7,
- la figure 10 est un ordinogramme du procédé de traitement embarqué mis en oeuvre par la charge utile des figures 8 et 9, et le système satellite décrit à la figure 7,
- la figure 11 est un ordinogramme d'une variante du procédé décrit à la figure 5. .

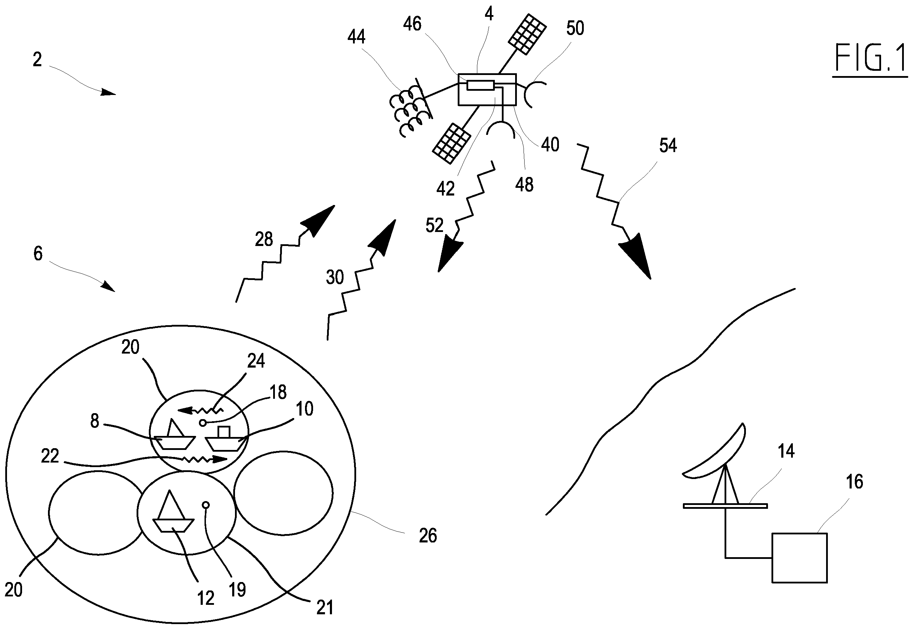

Le système 2 de satellites suivant la figure 1 comprend une constellation de satellites 4 à orbites basses typiquement des orbites dont l'altitude est comprise entre 500 km et 1500 km, un ensemble 6 de navires 8, 10, 12 émettant des signaux radioélectriques AIS, une première station satellitaire de réception au sol 14 de signaux AIS non démodulées à bord des satellites raccordée à un centre de traitement 16 des signaux AIS de navigation, et au moins une deuxième station locale 18, 19 de réception de signaux AIS démodulés à bord d'au moins un satellite.

La ou les stations locales 18, 19 sont situées sur des portions de terre, voire sur des îles, voire exceptionnellement sur des navires servant le cas échéant de relais d'accès aux navires 8, 10 et 12.

Les navires 8, 10, 12 voguant sur une mer ou un océan au niveau de la Terre, de différents tonnages et pouvant inclure des navires de plaisance, sont aptes à communiquer entre eux par l'intermédiaire de signaux radioélectriques portant des messages de données AIS définis selon la recommandation ITU-R M.1371-3.

Plus précisément, la recommandation ITU-R M.1371-3 définit les caractéristiques d'un système d'identification automatique universel de bord pour navire, utilisant l'accès multiple par répartition dans le temps et fonctionnant dans la bande attribuée aux services mobiles maritimes en ondes métriques.

Localement au niveau de la mer, c'est-à-dire à l'intérieur de la zone de portée radioélectrique des émetteurs AIS embarqués à bord des navires, typiquement 25 nm (nm étant la dénomination anglaise de miles nautiques), les émetteurs des navires 8, 10, 12 s'auto-organisent selon le protocole SOTDMA (dénomination anglaise de Self Organized Time Division Multiplex Access) afin de ne pas émettre leurs salves respectives dans des mêmes tranches de temps. De cette manière sont définies des zones locales de portée radioélectrique au niveau de la mer.

Sur la figure 1, deux zones locales 20, 21 sont représentées. Les navires 8 et 10 par leurs émetteurs AIS appartiennent à la même zone locale 20 tandis que le navire 12 appartient à une zone locale différente 21, l'émetteur du navire 12 étant hors de portée des récepteurs des navires 8 et 10.

Les stations locales 18, 19 sont respectivement situées à l'intérieur des et associés aux zones locales 20, 21.

Une zone de couverture globale 26 de réception satellitaire des signaux AIS émis depuis le sol par les navires 8, 10, 12 est représentée sur la figure 1. La zone de couverture globale 26 correspond à la zone de visibilité radioélectrique du satellite qui survole à un moment prédéterminé les zones locales 20, 21 dans lesquelles se trouvent les navires 8, 10 et 12. Le satellite permet ainsi d'accéder à une vision plus globale du trafic des navires au travers des émetteurs AIS des navires prévus à l'origine seulement pour une gestion locale de la navigation.

Le satellite 4 est apte à recevoir les signaux radioélectriques AIS de chacun des émetteurs, par exemple ceux des navires 8 et 10, au travers respectivement des liaisons radioélectriques VHF (dénomination anglaise de Very High Frequency) 28 et 30 représentées par des flèches.

Le satellite 4 comprend une plateforme 40 adaptée aux orbites basses et une charge utile 42 comprenant une antenne 44 de réception VHF des signaux AIS, un répéteur 46 avec du traitement embarqué, une première antenne et une deuxième antenne de retransmission 48, 50.

L'antenne de réception 44 est raccordée au travers du répéteur 46 aux antennes de retransmission 48, 50.

La première antenne de retransmission 48 est accordée à la fréquence d'une première liaison radioélectrique 52 permettant l'acheminement de données utiles AIS de navigation aux stations de réception locales 18, 19 situées respectivement dans les zones locales 20, 21. Les stations locales 18, 19 servent de stations de surveillance des navires 8, 10 et 12 qui leur sont directement associées ou qui appartiennent à une zone locale adjacente. Le cas échéant les stations locales servent de relais d'accès aux navires 8, 10 et 12. La liaison radioélectrique 52 est une liaison de télécommunication fonctionnant par exemple en bande L.

La deuxième antenne de retransmission 50 est accordée à la fréquence d'une deuxième liaison radioélectrique 54 permettant l'acheminement d'un volume élevé de données à la première station satellitaire de sol 14. La liaison radioélectrique 54 est par exemple une liaison classique de télémesure fonctionnant par exemple en bande C, d'autres bandes pouvant être également utilisées telles que notamment la bande S, X, Ku et Ka.

Les signaux radioélectriques AIS émis par les émetteurs des navires 8, 10 et 12 à la fréquence VHF et reçus par l'antenne de réception 44 sont aptes à transporter des messages AIS.

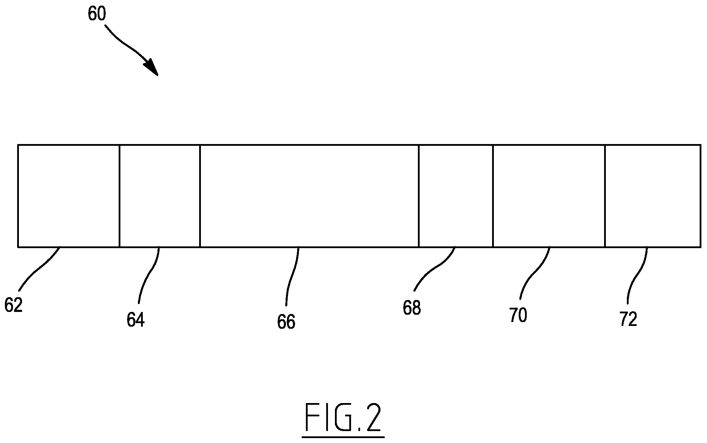

Suivant la figure 2, un message AIS est structuré selon une trame 60 de données binaires sous forme de zéros et de uns.

La trame 60 d'un message AIS comprend un premier champ 62 étalé sur 24 bits contenant une séquence d'apprentissage, un deuxième champ 64 étalé sur 8 bits contenant un drapeau de démarrage, un troisième champ 66 étalé sur 168 bits contenant des données utiles, un quatrième champ étalé sur 16 bits contenant un code classique de vérification d'intégrité des donnés utiles dénommé FCS (dénomination anglaise de Frame Check Sum), un cinquième champ étalé sur 8 bits contenant un drapeau de fin de trame, et un sixième champ d'une durée égale à celle de 24 bits permettant d'absorber les variation de délais de propagation.

Le message AIS 60 est codé par un codage de type NRZI (Non Retour à Zéro Inverse) avec changement de niveau en présence d'un bit à zéro, puis modulé par une modulation de type GMSK (dénomination anglaise de Gaussian Minimum Shift Keying) sous un débit de 9600 bits/s autour de deux fréquences porteuses comprises dans la bande VHF formant deux canaux situés autour de 162 MHz, un premier canal à 161,975 MHz et un deuxième canal à 162,025 MHz. La puissance d'émission des émetteurs des navires 8, 10 et 12 est de 2 W ou de 12,5 W selon la classe de l'émetteur.

Les messages 60 sont émis par salves à l'intérieur de tranches de temps, larges de 26,6 ms, et faisant partie d'une trame d'accès de 2250 tranches de temps d'une durée totale d'une minute.

Les messages 60 sont répétés périodiquement et émis alternativement sur les deux canaux.

Selon la position de l'émetteur du navire par rapport au satellite 4, le temps de propagation est très différent. Dans le cas par exemple d'un satellite situé à 600 kms d'altitude, le temps de propagation est compris entre 2 ms et 9,4 ms suivant la position de l'émetteur au sol, ce qui représente un écart maximum entre deux signaux AIS à l'arrivée au satellite 4 égal à la durée de 71 symboles de type GMSK.

Il existe ainsi des configurations de réception de signaux AIS dans lesquelles deux tranches de temps correspondant à des salves différentes se recouvrent entre elles, ce qui signifie que deux types de salves AIS sont reçues au niveau du satellite, des salves exemptes de collision par une autre salve et des salves présentant un état de collision avec une ou plusieurs autres salves.

Etant donné le champ de visibilité radioélectrique très grand observé depuis le satellite 4, de nombreux navires hors de portée radioélectrique locale AIS dans une même zone locale les uns des autres sont observés. Ces navires ont une probabilité non nulle d'émettre leurs salves respectives dans une même tranche de temps à l'arrivée au satellite et une superposition des signaux AIS dans le temps et en fréquence peut avoir lieu.

En fonction de la densité en navires dans la zone globale observée 26 à un instant prédéterminé de survol de cette zone par le satellite 4, ces collisions de salves sont plus ou moins nombreuses.

En fonction de la densité en navires dans la zone globale de réception 26 et d'un seuil prédéterminé de comparaison de la densité, la zone de réception 26 est qualifiée de « dense » ou de « peu dense ».

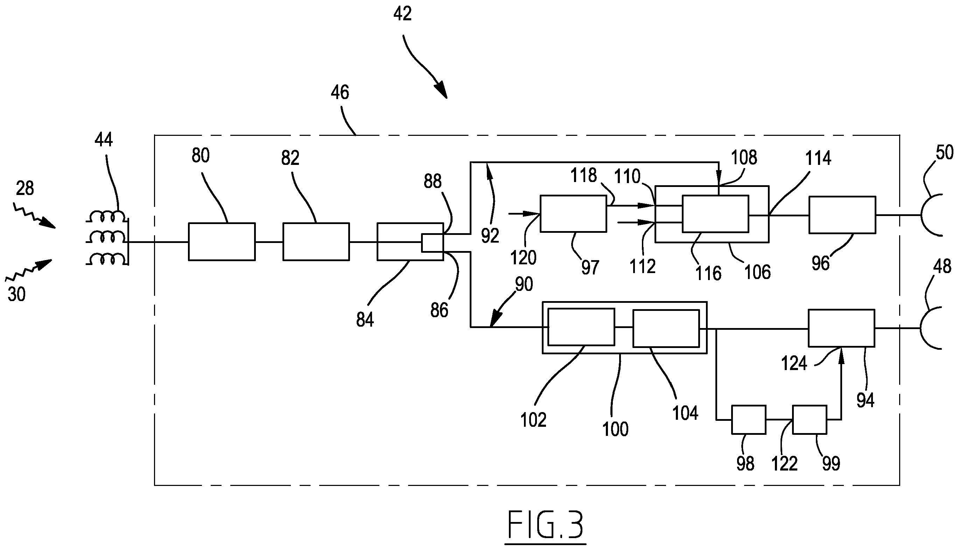

Suivant la figure 3, la charge utile 42 comprend sous une forme générique l'antenne de réception 44 VHF pour recevoir les signaux AIS, la première antenne de retransmission 48 de données utiles AIS, la deuxième antenne de retransmission 50 et un répéteur de traitement 46 embarqué à bord du satellite raccordant l'antenne de réception 44 aux deux antennes de retransmission 48 et 50.

L'antenne de réception 44 VHF est une antenne comprise dans l'ensemble des antennes constitué d'antennes filaires quelconques, d'antennes à hélice et d'antennes dites « patchs ».

Le répéteur de traitement embarqué 46 comprend un récepteur 80 classique VHF raccordé en aval de l'antenne de réception VHF 44, un convertisseur analogique-numérique 82 raccordé en aval du récepteur 80, un diviseur de signaux 84 à une entré et deux sorties, la première respectivement la deuxième étant référencées par les numéros 86 et 88.

Le répéteur de traitement 46 comprend également une première 90, respectivement une deuxième 92 chaine de transmission, raccordée à la première 86, respectivement à la deuxième sortie 88 du diviseur 84, un premier 94, respectivement un deuxième 96 émetteur interposé entre la première chaine 90 et la première antenne 48 de retransmission, respectivement entre la deuxième chaine 92 et la deuxième antenne 50 de retransmission, et un moyen de détermination 97 de l'état de collision de salves reçues au niveau de 44.

Le répéteur de traitement 46 comprend des moyens d'identification 98 de zone locale et le cas échéant d'une station locale associée, l'identification étant effectuée ici à partir des coordonnées des navires émetteurs de salves ainsi que des moyens 99 de détection de visibilité de station locale et de déclenchement d'une retransmission d'une salve AIS démodulée vers le sol.

La première chaine 90 comprend une unité de traitement 100 comportant en série un démodulateur 102 suivi d'un moyen d'extraction 104.

Le démodulateur 102 est apte à démoduler une salve reçue depuis la borne de sortie 86 en une trame de données binaires.

Le moyen d'extraction 104 est apte à extraire les informations utiles AIS de la trame de données démodulées en vue d'être traitée rapidement au sol par les stations sol locales 18, 19 situées respectivement dans les zones locales 20, 21 lorsque l'une ou les stations locales sont visibles par le satellite 4.

Ces informations utiles extraites du troisième champ 66 sont par exemple :
- l'identité du bateau donnée par le numéro MMSI du bateau codé sur 30 bits,
- la position du bateau donnée par sa latitude et sa longitude codées dans le message AIS sur 55 bits,
- l'horodatage donné en heure, minute et seconde UTC (Universal Time Clock), respectivement codées dans le message AIS sur 5, 7 et 6 bits).
L'extraction présente l'avantage d'un faible volume de données, environ une centaine de bits pour chaque signal correctement décodé, à descendre vers le sol.

La deuxième chaine de traitement 92 comprend un moyen d'activation 106 du transit des salves reçues dans la deuxième chaine 92.

Le moyen d'activation 106 du transit comprend une entrée de réception 108 de salves connectée à la borne 88 du diviseur 84, une première entrée 110 de commande d'activation du transit, une deuxième entrée 112 de commande de retransmission, et une borne de sortie 114 connectée en entrée au deuxième émetteur 96.

Le moyen d'activation 106 est réalisé sous la forme d'une mémoire de masse 116 ayant une borne de commande en écriture reliée à la première entrée 110 pour permettre la sauvegarde des données et une borne de commande en lecture reliée à la deuxième entrée 112 pour la retransmission des données sauvegardées via le deuxième émetteur 96.

La deuxième entrée 112 est apte à recevoir une information de commande de retransmission élaborée à partir d'un organe, non représenté sur la figure 3 et indiquant le moment où la première station de réception 14 raccordée à la station de traitement 16 est visible. La première station de réception 14 est par exemple une station de télémesure satellite.

Le moyen de détermination 97 comprend une sortie de délivrance de l'état de collision de la salve en cours de réception à l'entrée 88 et une entrée 120 apte à recevoir une information permettant de déterminer l'état de collision d'une salve en cours de traitement. En fonction de cette information reçue à l'entrée 120, le moyen de détermination 97 est en mesure d'indiquer au moyen d'activation 106 du transit l'état de collision de la salve en cours de traitement.

Une information représentative de l'état de collision de la salve en cours de traitement est par exemple un degré de densité de navires 8, 10, 12 contenu dans la zone de couverture 26 en visibilité du satellite 4. La zone de couverture 26 est qualifiée de « dense » lorsque la densité de navires dépasse une valeur de seuil prédéterminée et de « peu dense » dans le cas contraire.

Un autre exemple d'information représentative de l'état de collision d'une salve en cours de traitement est un état de succès de démodulation de la salve vérifié a posteriori après la démodulation de la salve par un démodulateur ou encore évalué a priori pendant l'estimation du canal de transmission en fonction d'autres paramètres comme des paramètres d'estimation d'un canal, le rapport signal à bruit.

Le moyen d'identification 98 de zone locale est connecté en entrée à la sortie du moyen d'extraction 104 et en sortie à une entrée 122 des moyens 99 de détection de visibilité et de déclenchement d'une retransmission.

Le moyen d'identification 98 est apte à fournir aux moyens de détection et de déclenchement 99 une identification d'une zone locale ici à partir de coordonnées d'un navire contenues dans le champ 66 extrait du moyen d'extraction 104 d'une salve démodulée avec succès.

Le moyen d'identification 98 est apte à déterminer et à fournir aux moyens 99 de détection et de déclenchement une information d'identification de la station locale associée à la zone locale identifiée ou à défaut d'existence d'une telle station locale un drapeau d'indication d'absence de station locale.

Les moyens de détection et de déclenchement 99 sont raccordées en sortie à une entrée de commande 124 du premier émetteur 94.

Les moyens 99 sont aptes à partir de l'information d'identification de la station locale à détecter la visibilité de la station locale par le satellite 4 et, lorsque une telle visibilité est détectée, à déclencher la retransmission vers la station locale associée à la salve dont les données utiles contiennent les coordonnées du navire émetteur située dans la zone locale contenant ladite station locale détectée visible.

Ainsi, un traitement en temps réel à bord du satellite de salves exemptes de collision et une retransmission immédiate des données démodulées correspondantes peuvent être effectués vers des stations sol locales visibles par le satellite 4, ce qui permet un gain de temps d'accès par les stations locales voire des navires aux informations AIS des navires appartenant à une même zone locale et accessibles depuis la station locale située dans ladite même zone locale.

En variante, le moyen d'identification 98 de zone locale est apte à détecter une zone locale en fonction des données d'orbitographie du satellite, par exemple des éphémérides, et des coordonnées de la station locale associée à la zone locale.

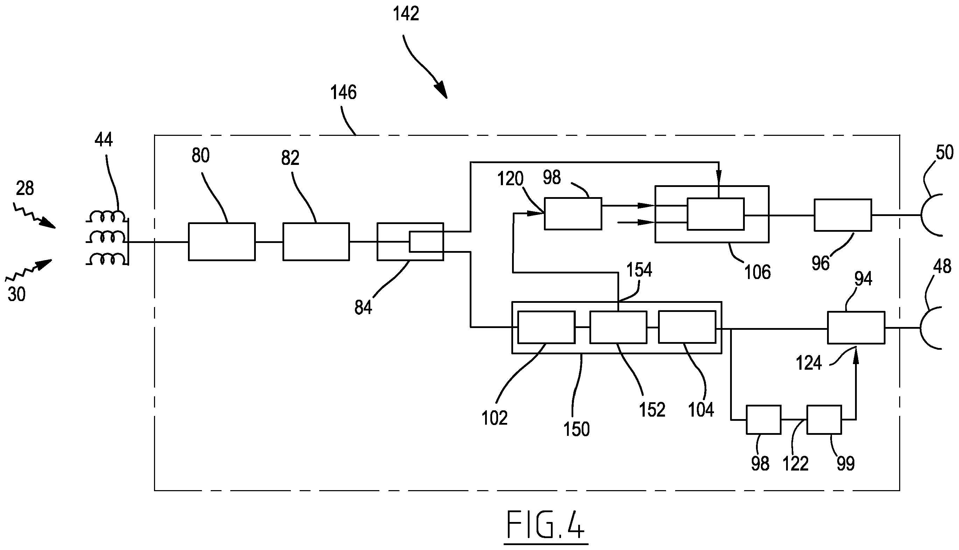

Suivant la figure 4, une variante 142 de la charge utile 42 décrite à la figure 3 est représentée dans laquelle les éléments identiques sont désignés par des références identiques.

La charge utile 142 comprend un répéteur 146 similaire au répéteur 46 de la figure 3 et dans lequel le moyen de traitement 100 est remplacé par un moyen de traitement 150.

Le moyen de traitement 150 comprend ici un moyen de détection 152 de l'état de succès de la démodulation d'une salve interposé entre le démodulateur 102 et le moyen d'extraction 104 de données utiles AIS.

Le moyen de détection 152 de l'état de succès de la démodulation est apte à fournir au moyen de détermination 97 à partir d'une sortie 154 l'état de succès de démodulation de la salve en fonction d'un certain nombre de données démodulées de la salve contenues dans le message AIS 60. Ces données peuvent être par exemple la somme de vérification FCS (dénommé en anglais le checksum) du message AIS pour vérifier l'intégrité du signal reçu ou encore la séquence d'apprentissage et les deux drapeaux contenus respectivement dans le premier champ 62, deuxième 64 et cinquième champ 70.

En variante de la structure décrite à la figure 4, le moyen de détection 150 est situé en amont du démodulateur 102, il est apte pendant l'estimation du canal de transmission soumis aux conditions de propagation de la liaison radioélectrique par exemple la liaison 28 à prédire un état d'échec de la démodulation lorsque les mesures d'erreurs quadratiques dépassent un seuil prédéterminé ou lorsque le rapport signal à bruit est en dessous d'un certain seuil.

Dans une variante des figures 3 et 4, le moyen d'extraction 104 et le moyen 98 sont enlevés.

Les moyens de détection et de déclenchement 99 dans ce cas sont aptes à activer la retransmission des données AIS démodulés lorsqu'au moins une station locale située dans la zone globale est visible en liaison descendante 52 par le satellite 4.

Dans cette configuration, la deuxième chaîne 92 enregistre en permanence toutes les salves reçues y compris les salves démodulées avec succès sur la première chaine.

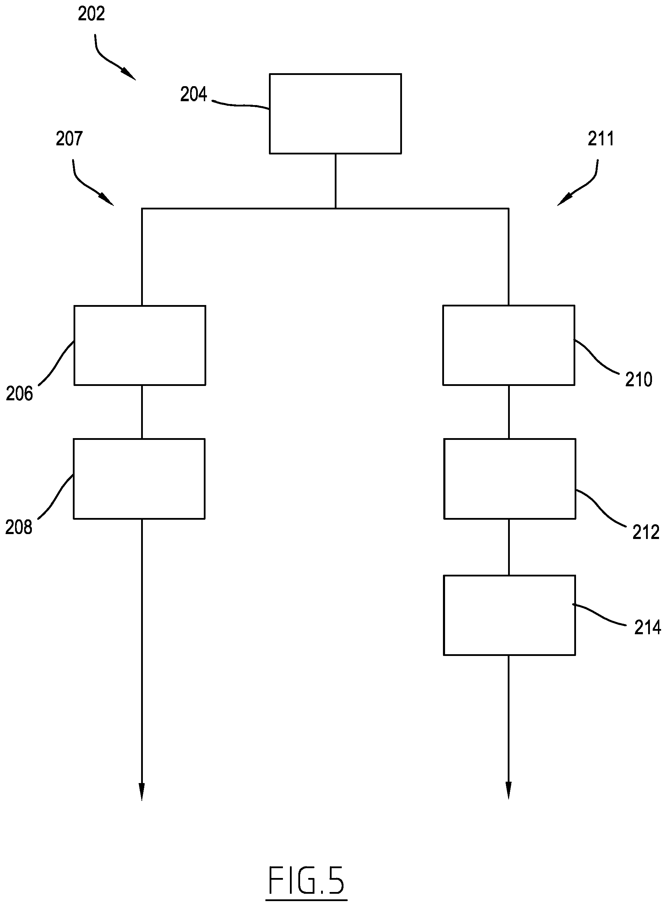

Suivant la figure 5, un procédé 202 de mise en oeuvre du système de satellites décrit à la figure 1 et plus particulièrement de la charge utile 42 de traitement embarquée décrite à la figure 3 comprend un ensemble d'étapes.

Il est supposé ici que les couvertures des liaisons montantes 28, 30 et de la liaison descendante 52 sont sensiblement les mêmes.

Dans une première étape 204, sont reçus et échantillonnés des signaux AIS émis sous la forme de salves à partir des navires 8, 10, 12 se trouvant dans la zone globale de couverture 26 du satellite 4, chaque salve reçue au niveau du satellite 4 présentant une absence ou une présence de collision avec une ou plusieurs autres salves.

Dans une étape 206 formant le début d'une première branche 207 d'étapes, suivant la première chaine de transmission 90, la salve reçue et échantillonnée, en cours de traitement, est démodulée par le démodulateur 102 en vue de fournir des données utiles de surveillance aux stations locales 18, 19 visibles en liaison descendante 52 depuis le satellite 4.

Puis dans une étape 208, les données utiles de surveillance sont retransmises directement aux stations locales 18, 19 via la première liaison radioélectrique 52.

En même temps que la mise en oeuvre des étapes 206 et 208 de la première branche 207, une deuxième branche 211 d'étapes est exécutée en parallèle.

Dans une première étape 210 de la deuxième branche 211, la salve reçue et échantillonnée est fournie à l'entrée 108 de réception de salve du moyen d'activation 106 qui est ici la mémoire de masse 116.

Dans une étape suivante 212, le moyen de détermination 97 détermine l'état de collision de la salve et fournit l'état de collision déterminé à l'entrée de commande 110 d'activation du moyen d'activation de transit dans la deuxième chaine 92.

Lorsque la salve est déterminée comme entachée par une collision, l'écriture de la salve numérisée est autorisée par la mémoire de masse 116 qui enregistre la salve en son sein.

Lorsque la salve est déterminée comme exempte de collision, la salve numérisée n'est pas écrite dans la mémoire de masse et reste bloquée à l'entrée 108.

Dans une étape suivante 214, lorsque le satellite 4 est en visibilité de la première station sol 14, un signal indicateur de l'état de visibilité de la première station sol 14 est fourni à la deuxième entrée 112 de commande de retransmission qui autorise la lecture des salves numérisées et non démodulées dans la mémoire de masse 116. La mémoire de masse 116 est ainsi vidée et les salves lues sont acheminées au deuxième émetteur 96 pour être retransmises via la deuxième liaison radioélectrique 54 à la station satellitaire au sol 14 en vue d'être traitées efficacement par des algorithmes de traitement du signal complexes le cas échéant.

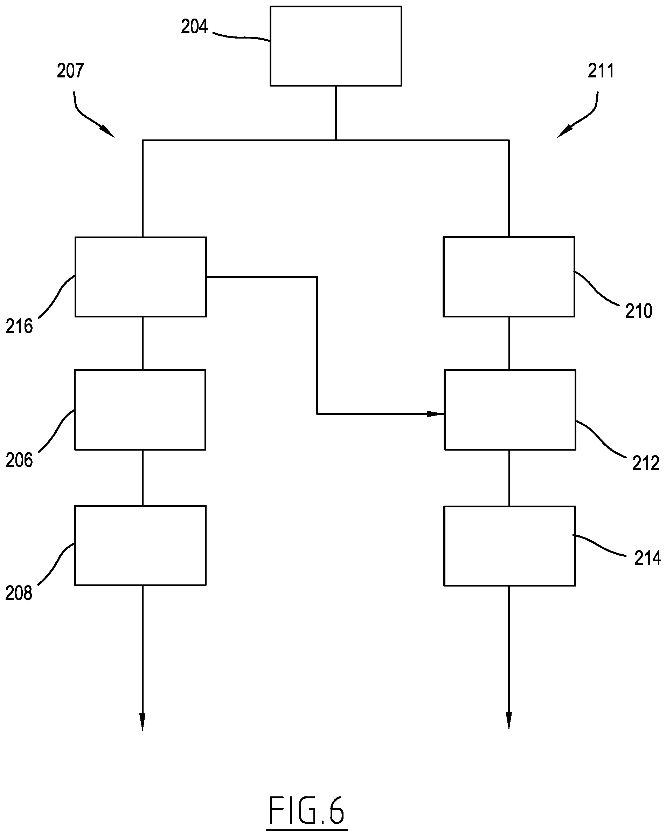

Suivant une variante du procédé décrit à la figure 5, le procédé 202 suivant la figure 6 comprend une étape 216 incorporée dans la première branche 207 et précédant l'étape 206.

Dans l'étape 216, une étape de détection a priori de la collision de la salve dont la démodulation est recherchée est exécutée par le moyen de détection 84 qui estime la qualité du canal de transmission pendant la réception de la salve et prédit l'état de succès ou d'échec de la démodulation de la salve lorsque des mesures d'erreurs quadratiques dépassent un seuil prédéterminé ou lorsque le rapport signal à bruit du signal de la salve reçue est située en dessous d'un certain seuil.

L'état de succès ou d'échec obtenu à l'étape 216 est fourni en entrée de l'étape 212 de détermination de l'état de collision de la salve.

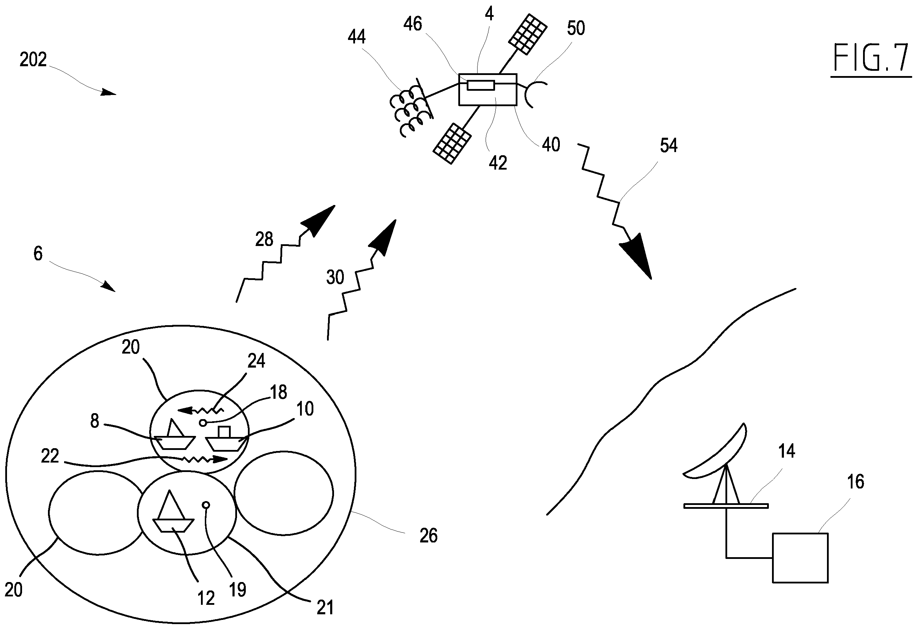

La figure 7 représente une deuxième forme de réalisation d'un système de satellites selon l'invention.

Par rapport au système 2 décrit à la figure 1, le système 202 de la figure 7 est dépourvu de l'antenne de retransmission 48 et de manière correspondante de la première liaison radioélectrique 52, cette liaison permettant dans le système de la figure 1 l'acheminement directe de données utiles AIS de navigation démodulées à bord du satellite aux stations locales 18 et 19.

Ici, on suppose que les données utiles AIS démodulées à bord du satellite 4 sont transmises à la première station sol 14 via la liaison radioélectrique 54 au travers de l'antenne 50 qui est ici unique. Le cas échéant, les données utiles reçues par la station de sol 14 pourront être réacheminées aux navires 8, 10, 12 au travers d'autres liaison non décrites ici.

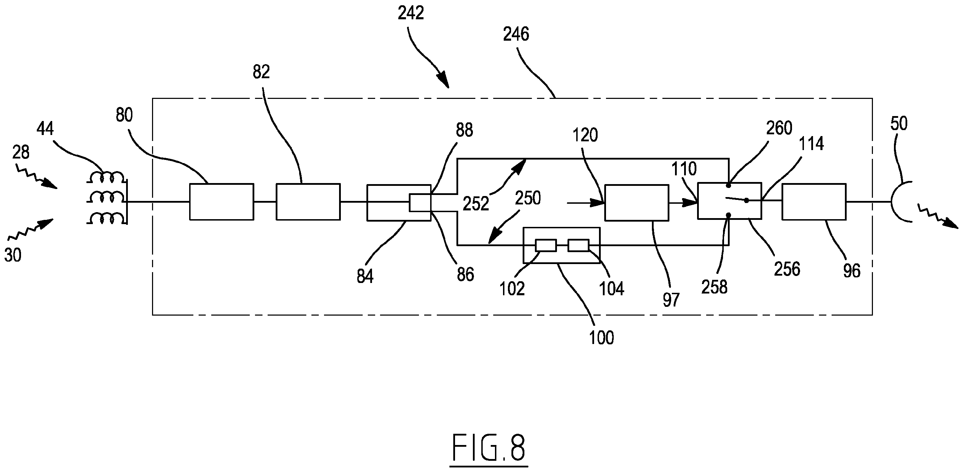

Suivant la figure 8, la charge utile 242 du satellite correspondant au système décrit à la figure 7 comprend des éléments identiques à ceux des charges utiles 42, 142 décrites aux figures 3, 4 et désignés par les mêmes références.

La charge utile 242 comprend sous une forme générique l'antenne de réception 44 VHF à hélice pour recevoir les signaux AIS, l'antenne de retransmission 50 pour retransmettre des donnés utiles AIS et des salves AIS non démodulées, et un répéteur 246 de traitement embarqué raccordant l'antenne de réception 44 à l'antenne de retransmission 50.

Le répéteur de traitement embarqué 246 comprend le récepteur 80 classique VHF raccordé en aval à l'antenne de réception VHF 44, le convertisseur analogique-numérique 82 raccordé en aval du récepteur 80, le diviseur de signaux 84 à une entrée et deux sorties 86 et 88.

Le répéteur de traitement 246 comprend également une première 250, respectivement une deuxième 252 chaine de transmission, raccordée à la première 86, respectivement à la deuxième sortie 88 du diviseur 84, l'émetteur 96 interposé entre les première et deuxième chaines 250, 252 prises ensemble et l'antenne 50 de retransmission, et le moyen de détermination 97 de l'état de collision de salves reçues au niveau de 44.

La première chaine 250 comprend l'unité de traitement 100 comportant en série le démodulateur 102 suivi du moyen d'extraction 104.

La deuxième chaine de traitement 252 comprend un moyen d'activation 256 du transit des salves reçues dans la deuxième chaine 252.

Le moyen d'activation 256 du transit dans la deuxième chaine 252 comprend une entrée de réception 260 de salves connectée à la borne 88 du diviseur 84, l'entrée 110 de commande d'activation du transit et la borne de sortie 114 connectée en entrée à l'émetteur 96.

Le moyen d'activation 256 est ici réalisé sous la forme d'un moyen de sélection de la sortie d'une des chaines 250, 252, la sortie de la première 250, respectivement de la deuxième chaine 252 étant référencée 258, respectivement 260.

L'émetteur 96 comprend une mémoire tampon, non représentée sur la figure 8. La mémoire tampon est apte à sauvegarder les données émises par le moyen de sélection 256 auquel il est raccordé, et à les retransmettre lorsqu'elle reçoit un signal de commande indiquant qu'une première station sol 14 est en visibilité du satellite 4.

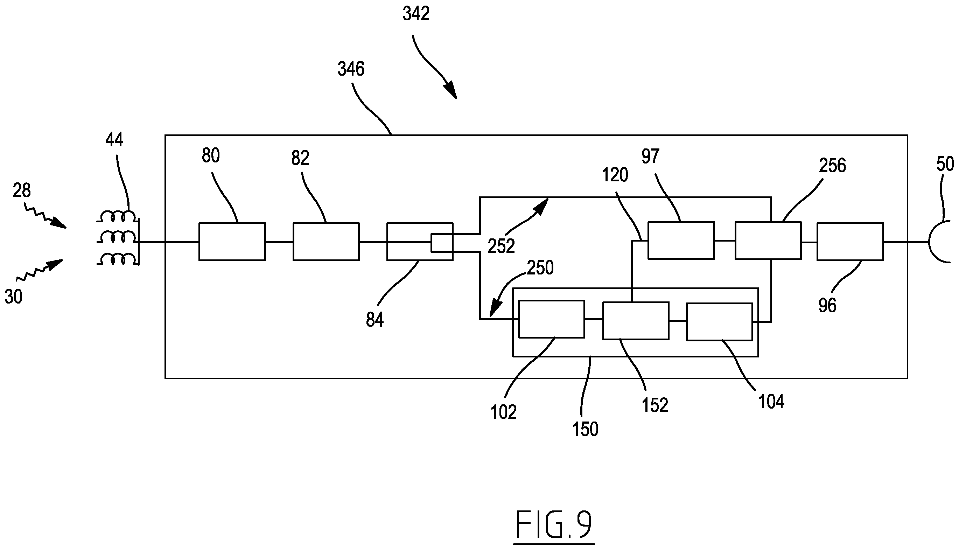

Suivant la figure 9, une variante 342 de la charge utile 242 décrite à la figure 8 est représentée dans laquelle les éléments identiques sont désignés par des références identiques.

La charge utile 342 comprend un répéteur 346 similaire au répéteur 246 de la figure 8 dans lequel le moyen de traitement 100 est remplacé par un moyen de traitement 150 identique à celui décrit à la figure 4.

Le moyen de détection 152 de l'état de succès de la démodulation est apte à fournir au moyen de détermination 97 auquel il est raccordé, l'état de succès de démodulation de la salve en fonction d'un certain nombre de données démodulées de la salve contenues dans le message AIS 60.

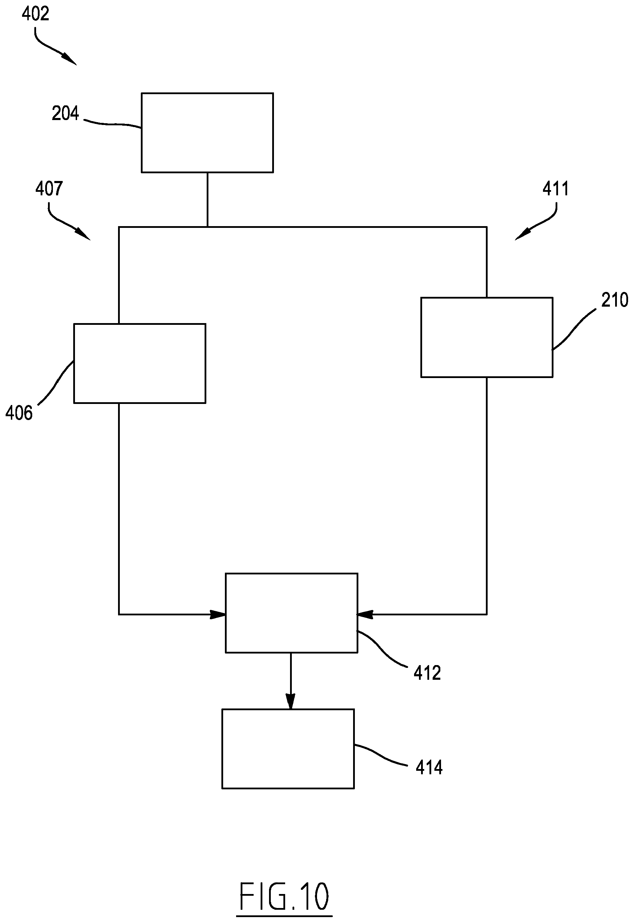

Suivant la figure 10, un procédé 402 de mise en oeuvre du système de satellites décrit à la figure 7 et plus particulièrement de la charge utile 242 de traitement embarquée décrite à la figure 8 comprend un ensemble d'étapes.

La première étape 204, identique à celle décrite de la figure 5, est suivie par une division en deux branches première et deuxième, 407 et 411 d'étapes exécutées en parallèle.

La première branche 407 comprend l'étape 406 formant le début de la première branche.

Dans l'étape 406, suivant la première chaîne de transmission 250, la salve reçue et échantillonnée, en cours de traitement, est démodulée par le démodulateur 102, en vue de fournir des données utiles de surveillance à la première station sol 14 au travers de la liaison radioélectrique 54.

La deuxième branche 411 comprend l'étape 210 identique à celle décrite à la figure 5 dans laquelle la salve reçue et échantillonnée est fournie à l'entrée 260 de réception de salve du moyen de sélection 256. Il est remarquer qu'ici le moyen d'activation de transit 256 est un moyen de sélection et que l'entrée 260 est également la sortie de la deuxième chaine 252.

Puis, les deux branches 411 et 417 se rejoignent en une étape 412.

Dans l'étape 412, d'abord le moyen de détermination 97 détermine l'état de collision de la salve et fournit l'état de collision déterminé à l'entrée de commande 110 du moyen de sélection 256 formant également un moyen d'activation de transit dans la deuxième chaine 252.

Puis dans la même étape 412, le moyen de sélection 256 sélectionne pour la salve reçue et échantillonnée en cours de traitement la sortie 258, 260 d'une des deux chaines de transmission 250, 252 en fonction de l'état de collision de la salve fournie à la borne de commande 110.

Lorsque la salve est déterminée entachée par une collision, la sortie 260 est sélectionné autorisant le transit de la salve numérisée jusqu'à l'émetteur 96.

Lorsque la salve est déterminée exempte de collision, la sortie 258 est sélectionnée autorisant l'acheminement du message AIS correspondant à la salve jusqu'à l'émetteur 96 dans une mémoire tampon de l'émetteur.

Dans une étape suivante 414, lorsque le satellite 4 est en visibilité de la première station sol 14, un signal indicateur de l'état de visibilité est fourni à l'émetteur 96 qui retransmet via la liaison radioélectrique 54 des salves AIS numérisées non démodulées et des messages AIS de salves démodulées à la première station satellitaire au sol en vue d'être traité efficacement par des algorithmes de traitement du signal complexe.

En variante, il est supposé que la zone de couverture en liaison descendante 54 de la première station sol 14 est sensiblement la même que celle de la couverture globale 26 en liaisons montantes 28, 30 des navires 8, 10, 12.

Il est supposé également qu'il existe des stations locales situées dans les zones locales 20, 21 apte à recevoir les mêmes signaux que ceux reçus par la première station sol 14 sur la liaison radioélectrique 54.

Dans ce cas, l'émetteur 96 retransmet en permanence les données fournies par le moyen de sélection 256. L'émetteur de retransmission 96 retransmet les données utiles AIS démodulées vers le sol si la sortie de la première chaîne 250 est sélectionnée ou retransmet les échantillons de la salve sans l'avoir démodulée si la sortie de la deuxième chaîne 252 est sélectionnée.

Dans cette configuration particulière, les stations locales sont aptes à recevoir les données AIS démodulées à bord du satellite 4, ce qui diminue le temps d'accès aux informations AIS pour les stations locales.

Cette configuration permet également à la première station sol 14 de démoduler par des algorithmes complexes les salves entachées de collisions non démodulées.

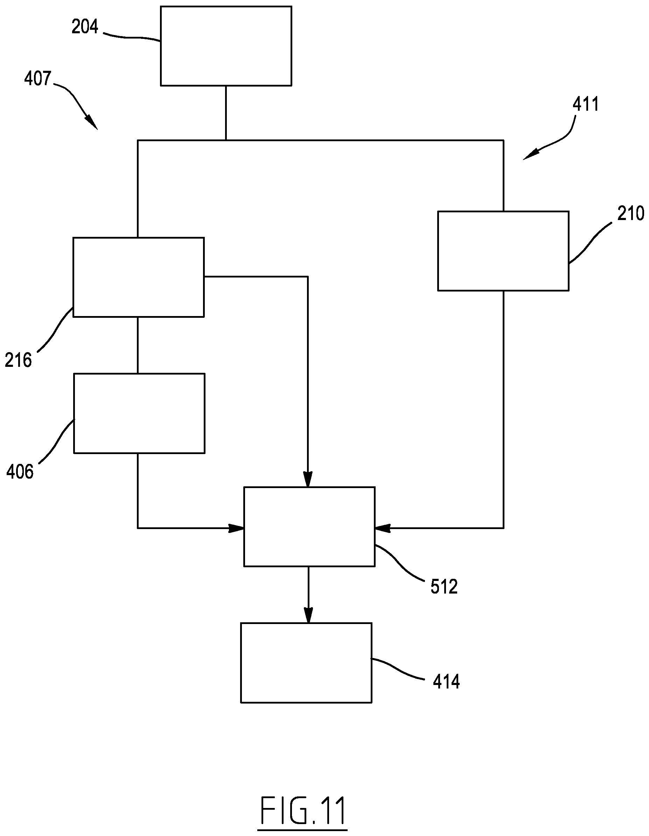

Suivant une variante du procédé de la figure 10, le procédé 502 suivant la figure 11 comprend l'étape 216, identique à celle décrite à la figure 6 et incorporée dans la première branche 407 et précédant l'étape 406.

L'état de succès ou d'échec a priori de la démodulation de la salve déterminé à l'étape 216 est fourni en entrée de l'étape 512 décrite à la figure 10.

En variante de la figure 11, l'étape de détection 216 de succès de la modulation est une étape d'exécution a posteriori effectuée après l'étape de démodulation 406 à partir de données contenues dans la trame binaire du message AIS démodulé comme par exemple la séquence d'apprentissage, les deux drapeaux de démarrage et de fin encadrant les données utiles AIS, et le checksum FCS.

En variante, la constellation de satellites est à orbites moyennes typiquement des orbites dont l'altitude est comprise entre 10000 et 20000 kms.

En variante, le moyen de sélection est apte à sélectionner une entrée parmi les deux entrées des deux chaines de traitement 250, 252 et plus généralement une des deux chaines de traitement.

Le système satellite décrit aux figures 1 et 7 permet avantageusement d'avoir une visibilité plus grande du trafic maritime et de surveiller les trajectoires des navires sur une plus grande distance par un simple traitement des messages AIS et sans nécessité d'installation d'équipements supplémentaires à bord des navires.

Les charges utiles permettent également d'alléger les taches de traitement au niveau du sol effectuées par le centre de traitement 16 des signaux AIS de navigation.

En effet, lorsqu'une salve est exempte de collision, elle est traitée à bord du satellite qui la démodule et en extrait des données utiles. Ainsi ces tâches de traitement réalisé sur un volume de salves pouvant être important ne sont pas à exécuter par le centre de traitement et cela allège sa charge de travail.

La charge utile selon l'invention permet en même temps de gérer l'ensemble des salves reçues et un traitement intègre du volume des messages émis par l'ensemble des navires. En effet, en retransmettant au sol les salves présentant une collision pour faire l'objet d'un traitement plus complexe par le centre de traitement 16, aucun des messages émis par les navires ne sera ignoré.

Les charges utiles décrites aux figures 3, 4, 8 et 9 permettent de traiter la totalité des salves reçues y compris les salves dont la démodulation est infructueuse ou a une forte probabilité de l'être.

De manière globale, le temps de réaction du système pour répondre à un message renseignant une situation dangereuse est diminué.

## Revendications

1. Charge utile d'un satellite (2) destiné à la surveillance de trajectoires maritimes de navires apte à recevoir des signaux AIS, propres à un système de navigation maritime au sol AIS, et émis sous forme de salves à partir de navires (8,10,12) sur la mer comprenant :
une première chaîne de transmission (90, 250) apte à démoduler chaque salve reçue en des données utiles de surveillance et à retransmettre lesdites données utiles vers le sol,
chaque salve reçue présentant une absence ou une présence de collision avec une ou plusieurs autres salves,
**caractérisée en ce que**
la charge utile (42, 242) comprend une deuxième chaine de transmission (92, 252) apte à recevoir les mêmes signaux AIS que la première chaîne (90,250) et apte à retransmettre vers le sol les salves reçues sans les avoir démodulées ;
**en ce que** la deuxième chaîne de transmission (92, 252) comprend un moyen d'activation de transit (106, 256) de salves reçues dans la deuxième chaine (92, 252), le moyen d'activation (106, 256) ayant une entrée de réception de salve (108, 260) et une entrée de commande d'activation (110), et étant apte à activer le transit dans la deuxième chaine (92, 252) d'une salve reçue à l'entrée de réception (108, 260) en fonction d'un signal d'entrée fournie à l'entrée de commande d'activation (110), le signal d'entrée étant représentatif de l'état de collision de la salve compris parmi une présence ou une absence de collision avec une autre salve ; et
**en ce que** le moyen d'activation (106, 256) est apte à activer le transit dans la deuxième chaine (92) d'une salve reçue lorsque la salve est entachée de collisions ou présente une forte probabilité supérieure à un seuil prédéterminée d'être entachée de collisions.

2. Charge utile selon la revendication 1, **caractérisée en ce que** la première chaine de transmission (90, 250) est apte à démoduler les salves exemptes de collision et à les retransmettre ensuite immédiatement vers le sol.

3. Charge utile selon l'une quelconque des revendications 1 à 2, **caractérisée en ce que** la première chaine de transmission est apte à retransmettre immédiatement les salves démodulées exemptes de collision à des stations locales (18, 19) lorsqu'au moins une station locale (18, 19) est visible depuis le satellite.

4. Charge utile selon l'une quelconque des revendications 1 à 3, **caractérisée en ce que** la première chaine de transmission (90, 250) est apte à extraire, pour une salve donnée démodulée avec succès, une information de localisation de l'émetteur de la salve démodulée, à déterminer une station locale (18 ; 19) de rattachement de l'émetteur (8, 10; 12) et à retransmettre immédiatement à la station locale (18 ; 19) la salve démodulée lorsque la station locale (18; 19) est visible depuis le satellite (4).

5. Charge utile selon l'une quelconque des revendications 1 à 4, **caractérisée en ce qu'**elle comprend un moyen d'identification (98) de zone locale et/ou d'une station locale associée, et
des moyens (99) de détection de visibilité d'une station locale et de déclenchement de retransmission d'au moins une salve AIS démodulée vers le sol.

6. Charge utile selon l'une quelconque des revendications 1 à 5, **caractérisée en ce que** la charge utile (42, 242) comprend un moyen de détermination (97) de l'état de collision raccordé à l'entrée (110) du moyen d'activation (106, 256).

7. Charge utile selon la revendication 6, **caractérisée en ce que** le moyen de détermination (97) est apte à indiquer au moyen d'activation (106) que la salve est exempte de collision lorsque le satellite (4) indique qu'il survole une zone de couverture (26) de réception prédéterminée qualifiée de peu dense en émetteurs AIS et que la salve est entachée d'une collision lorsque le satellite (4) survole une zone de couverture (26) de réception prédéterminée qualifiée à l'inverse de dense en émetteurs AIS.

8. Charge utile selon la revendication 6, **caractérisée en ce que** la première chaine (90, 250) comprend un moyen de détection (152) du succès ou de l'échec de la démodulation de la salve raccordé au moyen de détermination (97) et **en ce que** lorsque la démodulation d'une salve est infructueuse dans la première chaine (90, 250), la charge utile est apte à retransmettre au sol la même salve non démodulée dans la deuxième chaine (92, 252).

9. Charge utile selon la revendication 8, **caractérisée en ce que** le moyen de détermination (97) est apte à activer le moyen de détection (152) du succès de la démodulation de la salve lorsque seulement le satellite (4) indique qu'il survole une zone de couverture (26) de réception prédéterminée qualifiée de peu dense en émetteurs AIS à l'inverse d'une zone de couverture de réception qualifiée de dense.

10. Charge utile selon l'une quelconque des revendications 8 à 9, **caractérisée en ce que** le dispositif de détection (152) du succès de la démodulation est un dispositif de détection a priori dont la sortie dépend de paramètres d'une estimation du canal de transmission effectuée en amont d'un démodulateur (102).

11. Charge utile selon l'une quelconque des revendications 8 à 9, **caractérisée en ce que** le dispositif de détection (152) du succès de la démodulation est un dispositif de détection a posteriori dont la sortie dépend de données démodulées comprenant la séquence d'un code de détection d'intégrité de données et/ou une séquence de données prédéterminée connue a priori.

12. Charge utile selon l'une quelconque des revendications 6 à 11, **caractérisée en ce que** lorsque l'état de collision est déclaré exempt de collision par le moyen de détermination (97) et que la démodulation de la salve effectuée dans la première chaine (90, 250) est infructueuse, la charge utile est apte à inhiber également la salve sur la première chaine (90, 250) de sorte qu'aucune retransmission de données démodulées correspondant à cette salve n'est effectuée.

13. Charge utile d'un satellite selon l'un quelconque des revendications 1 à 12, **caractérisée en ce que**
la première chaîne (90, 250) est raccordée à un premier émetteur (94) apte à fonctionner dans une première bande de fréquences,
le moyen d'activation (106) de transit dans la deuxième chaine (92) est raccordé à un deuxième émetteur (96) apte à fonctionner dans une deuxième bande de fréquences distincte de la première bande,
et le moyen d'activation (106) de transit dans la deuxième chaine (92) comprend une mémoire de masse tampon (116) apte à enregistrer les salves reçues non démodulées en données utiles lorsqu'elle reçoit un signal de commande d'activation d'écriture représentatif de l'état de la collision de la salve avec une autre salve.

14. Charge utile selon la revendication 13, **caractérisée en ce que** la première bande est comprise dans la bande L, X, C, Ku, Ka et **en ce que** la deuxième bande est comprise dans l'une des bandes S, X, C, Ku et Ka.

15. Charge utile d'un satellite selon l'une quelconque des revendications 1 à 12, **caractérisée en ce que**
la charge utile (242) comprend un unique émetteur (96) raccordé en son entrée au moyen d'activation (256),
le moyen d'activation (256) du transit dans la deuxième chaine (252) est un moyen de sélection (256) d'une chaîne parmi les deux chaines (250, 252) et **en ce que**
le moyen de sélection (256) est apte à choisir pour chaque salve reçue l'une des deux chaines (250, 252) en fonction de l'état de collision de la salve parmi une présence ou une absence de collision avec une autre salve.

16. Charge utile selon la revendication 15, **caractérisé en ce que** le moyen de sélection (256) comprend une deuxième entrée (258) de réception d'une salve démodulée dans la première chaîne (250) et ce que le moyen de sélection (256) est apte à choisir pour chaque salve reçue l'une des entrées de réception (258, 260) en fonction de l'état de collision de la salve parmi une présence ou une absence de collision avec une autre salve.

17. Charge utile selon la revendication 16, **caractérisée en ce que** le moyen de sélection (256) est apte à choisir la première chaîne (250) lorsque la salve est exempte de collision et la deuxième chaîne (252) lorsque la salve a subi une collision avec une autre salve.

18. Charge utile selon l'une quelconque des revendications 1 à 5, **caractérisée en ce que** la deuxième chaîne (92, 252) est apte à retransmettre vers le sol toutes les salves reçues sans les avoir démodulées y compris les salves correspondant aux salves démodulées avec succès par le première chaine.

19. Système de satellites intégré dans un système de navigation maritime au sol de type AIS destiné à la surveillance de trajectoires maritimes de navires comprenant :
une constellation de satellites (4) défilants, chaque satellite (4) comportant une charge utile (42, 242) conforme à l'une des revendications 1 à 18,
au moins deux émetteurs AIS embarqués chacun sur un navire différent (8, 10, 12),
une première station satellitaire de sol (14) apte à recevoir les salves non démodulées à bord des satellites (4) et émises à partir d'au moins un satellite (4), et à démoduler les salves non démodulées en des données utiles AIS en vue de suivre les trajectoires de navires (8, 10, 12) correspondantes aux données utiles démodulées par la station satellitaire de sol (14),
au moins une deuxième station satellitaire locale (18, 19) de surveillance apte à recevoir les salves démodulées à bord des satellites (4) et retransmises immédiatement.

20. Procédé de traitement mis en oeuvre dans un système de satellites défini selon la revendication 19, comprenant les étapes consistant à :
recevoir (204) au niveau d'un satellite des signaux AIS propres au système maritime au sol et émis sous forme de salves à partir de navires (8, 10, 12), chaque salve reçue au niveau du satellite (4) présentant une absence ou une présence de collision avec une ou plusieurs autres salves,
suivant une première chaine de transmission (90), démoduler (206) chaque salve reçue en des données utiles de surveillance et retransmettre les données utiles au sol,
**caractérisé en ce qu'**il comprend les étapes consistant à
retransmettre les salves AIS reçues sans les démoduler suivant une deuxième chaine (92) vers un station sol (14),
recevoir par une station sol les salves non démodulées et les traiter au sol en temps différé pour les démoduler.

21. Procédé selon la revendication 20, **caractérisé en ce qu'**il comprend l'étape consistant à
activer le transit des salves dans la deuxième chaine de salves non démodulées lorsque les salves sont entachées de collision avec d'autres salves.

22. Procédé selon la revendication 20 dans lequel le moyen d'activation du transit est le moyen de sélection (256) et **caractérisé en ce qu'**il comprend l'étape consistant à
choisir par le moyen de sélection (256) pour chaque salve reçue la sortie (258, 260) d'une des deux chaines de transmission (250, 252) en fonction de l'état de collision de la salve parmi une présence ou une absence de collision avec une autre salve,
retransmettre lesdites données utiles vers le sol si la sortie (258) de la première chaîne (250) est sélectionnée ou retransmettre par la deuxième chaîne (252) les salves sans les avoir démodulées si la sortie (260) de la deuxième chaîne (252) est sélectionnée.

## Patentansprüche

1. Nutzlast eines Satelliten (2), der dazu bestimmt ist, Seefahrtwege von Seefahrzeugen zu überwachen, dazu geeignet, AIS-Signale zu empfangen, die für ein AIS-System zur Meeresnavigation am Boden charakteristisch sind und in Form von Signalstößen von Seefahrzeugen (8, 10, 12) auf dem Meer ausgesendet werden, die umfasst:
eine erste Übertragungskette (90, 250), dazu geeignet, jeden empfangenen Signalstoß in überwachende Nutzdaten zu demodulieren und die besagten Nutzdaten an den Boden zurückzusenden,
wobei jeder empfangene Signalstoß eine fehlende oder eine vorhandene Kollision mit einem oder mehreren anderen Signalstößen darstellt,
**dadurch gekennzeichnet, dass**
die Nutzlast (42, 242) eine zweite Übertragungskette (92, 252) umfasst, die geeignet ist, die gleichen AIS-Signale wie die erste Kette (90, 250) zu empfangen, und dazu geeignet, die empfangenen Signalstöße an den Boden zurückzusenden, ohne sie demoduliert zu haben;
dadurch, dass die zweite Übertragungskette (92, 252) ein Mittel zur Aktivierung einer Weiterleitung (106, 256) von empfangenen Signalstößen in der zweiten Kette (92, 252) umfasst, wobei das Mittel zur Aktivierung (106, 256) einen Signalstoßempfangseingang (108, 260) und einen Aktivierungssteuereingang (110) hat, und dazu geeignet ist, die Weiterleitung in der zweiten Kette (92, 252) eines am Empfangseingang (108, 260) empfangenen Signalstoßes entsprechend eines am Aktivierungssteuereingang (110) ausgegebenen Eingangssignals zu aktivieren, wobei das Eingangssignal für den Kollisionszustand des Signalstoßes einer fehlenden oder einer vorhandenen Kollision mit einem anderen Signalstoß steht; und
dadurch, dass das Mittel zur Aktivierung (106, 256) geeignet ist, die Weiterleitung in der zweiten Kette (92) eines empfangenen Signalstoßes zu aktivieren, wenn der Signalstoß von Kollisionen beeinträchtigt ist oder eine über einem vorbestimmten Grenzwert liegende große Wahrscheinlichkeit aufweist, durch Kollisionen beeinträchtigt zu werden.

2. Nutzlast nach Anspruch 1, **dadurch gekennzeichnet, dass** die erste Übertragungskette (90, 250) geeignet ist, die von Kollisionen freien Signalstöße zu demodulieren und sie anschließend unmittelbar an den Boden zurückzusenden.

3. Nutzlast nach einem der Ansprüche 1 bis 2, **dadurch gekennzeichnet, dass** die erste Übertragungskette geeignet ist, die demodulierten Signalstöße, die frei von Kollisionen sind, unmittelbar an lokale Stationen (18, 19) zurückzusenden, wenn mindestens eine lokale Station (18, 19) vom Satelliten aus sichtbar ist.

4. Nutzlast nach einem der Ansprüche 1 bis 3, **dadurch gekennzeichnet, dass** die erste Übertragungskette (90, 250) geeignet ist, für einen gegebenen, erfolgreich demodulierten Signalstoß eine Information zur Ortung des Senders des demodulierten Signalstoßes zu extrahieren, eine lokale Station (18, 19) zur Verknüpfung des Senders (8, 10, 12) zu bestimmen und den demodulierten Signalstoß unmittelbar an die lokale Station (18, 19) zurückzusenden, wenn die lokale Station (18, 19) vom Satelliten (4) aus sichtbar ist.

5. Nutzlast nach einem der Ansprüche 1 bis 4, **dadurch gekennzeichnet, dass** sie ein Mittel zur Identifizierung (98) eines lokalen Bereiches und/oder einer verbundenen lokalen Station umfasst, und
Mittel (99) zur Erfassung der Sichtbarkeit einer lokalen Station und zum Auslösen einer Zurücksendung von mindestens einem demodulierten AIS-Signalstoß an den Boden.

6. Nutzlast nach einem der Ansprüche 1 bis 5, **dadurch gekennzeichnet, dass** die Nutzlast (42, 242) ein Mittel zur Bestimmung (97) des Kollisionszustandes, umfasst, das am Eingang (110) des Aktivierungsmittels (106, 256) angeschlossen ist.

7. Nutzlast nach Anspruch 6, **dadurch gekennzeichnet, dass** das Mittel zur Bestimmung (97) geeignet ist, dem Aktivierungsmittel (106) anzuzeigen, dass der Signalstoß frei von Kollision ist, wenn der Satellit (4) anzeigt, dass er einen vorbestimmten Empfangsabdeckungsbereich (26) überfliegt, der als von geringer Dichte an AIS-Sendern eingestuft ist, und dass der Signalstoß von einer Kollision beeinträchtigt ist, wenn der Satellit (4) einen vorbestimmten Empfangsabdeckungsbereich (26) überfliegt, der umgekehrt als von hoher Dichte an AIS-Sendern eingestuft ist.

8. Nutzlast nach Anspruch 6, **dadurch gekennzeichnet, dass** die erste Kette (90, 250) ein Mittel zur Erkennung (152) des Erfolgs oder des Scheiterns der Demodulierung des Signalstoßes umfasst, das an dem Mittel zur Bestimmung (97) angeschlossen ist, und dadurch, dass, wenn die Demodulierung eines Signalstoßes in der ersten Kette (90, 250) erfolglos ist, die Nutzlast geeignet ist, denselben, nicht demodulierten Signalstoß in der zweiten Kette (90, 252) an den Boden zurückzusenden.

9. Nutzlast nach Anspruch 8, **dadurch gekennzeichnet, dass** das Mittel zur Bestimmung (97) geeignet ist, das Mittel zur Erkennung (152) des Erfolgs der Demodulierung des Signalstoßes zu aktivieren, wenn nur der Satellit (4) anzeigt, dass er einen vorbestimmten Empfangsabdeckungsbereich (26) überfliegt, der als von geringer Dichte an AIS-Sendern eingestuft ist, entgegengesetzt zu einem Empfangsabdeckungsbereich, der als von hoher Dichte eingestuft ist.

10. Nutzlast nach einem der Ansprüche 8 bis 9, **dadurch gekennzeichnet, dass** die Vorrichtung zur Erkennung (152) des Erfolgs der Demodulierung eine Vorrichtung zur Vorab-Erkennung ist, deren Ausgang von Parametern einer Schätzung des Übertragungskanals abhängig ist, die vor einem Demodulator (102) vorgenommen wird.

11. Nutzlast nach einem der Ansprüche 8 bis 9, **dadurch gekennzeichnet, dass** die Vorrichtung zur Erkennung (152) des Erfolges der Demodulierung eine Vorrichtung zur nachträglichen Erkennung ist, deren Ausgang von demodulierten Daten abhängig ist, die die Abfolge eines Codes zur Erkennung einer Integrität von Daten und/oder eine vorab bekannte vorbestimmte Datenabfolge umfasst.

12. Nutzlast nach einem der Ansprüche 6 bis 11, **dadurch gekennzeichnet, dass**, wenn der Kollisionszustand von dem Mittel zur Bestimmung (97) als kollisionsfrei deklariert wurde und die in der ersten Kette (90, 250) vorgenommene Demodulierung des Signalstoßes erfolglos ist, die Nutzlast geeignet ist, den Signalstoß auf die erste Kette (90, 250) ebenfalls zu hemmen, dergestalt, dass keine Rücksendung von demodulierten Daten, die diesem Signalstoß entsprechen, vorgenommen wird.

13. Nutzlast eines Satelliten nach einem der Ansprüche 1 bis 12, **dadurch gekennzeichnet, dass**
die erste Kette (90, 250) an einen ersten Sender (94) angeschlossen ist, der geeignet ist, in einem ersten Frequenzbereich zu funktionieren,
das Mittel zur Aktivierung (106) zur Weiterleitung in der zweiten Kette (92) an einen zweiten Sender (96) angeschlossen ist, der geeignet ist, in einem zweiten Frequenzbereich zu funktionieren, der von dem ersten Bereich verschieden ist,
und das Mittel zur Aktivierung (106) einer Weiterleitung in der zweiten Kette (92) einen Puffer-Massenspeicher (116) umfasst, der geeignet ist, die nicht demodulierten empfangenen Signalstöße in Nutzdaten zu erfassen, wenn er ein Steuersignal zur Schreibaktivierung erhält, das für den Zustand der Kollision des Signalstoßes mit einem anderen Signalstoß steht.

14. Nutzlast nach Anspruch 13, **dadurch gekennzeichnet, dass** die erste Reichweite innerhalb der Reichweite L, X, C, Ku, Ka liegt und dass die zweite Reichweite innerhalb einer der Reichweiten S, X, C, Ku und Ka liegt.

15. Nutzlast eines Satelliten nach einem der Ansprüche 1 bis 12, **dadurch gekennzeichnet, dass**
die Nutzlast (242) einen einzigen Sender (96) umfasst, der an seinem Eingang an das Mittel zur Aktivierung (256) angeschlossen ist,
das Mittel zur Aktivierung (256) der Weiterleitung in der zweiten Kette (252) ein Mittel zur Auswahl (256) einer Kette aus den zwei Ketten (250, 252) ist, und dadurch, dass
das Mittel zur Auswahl (256) geeignet ist, für jeden empfangenen Signalstoß eine der zwei Ketten (250, 252) entsprechend dem Kollisionszustand des Signalstoßes einer vorhandenen oder einer fehlenden Kollision mit einem anderen Signalstoß zu wählen.

16. Nutzlast nach Anspruch 15, **dadurch gekennzeichnet, dass** das Mittel zur Auswahl (256) einen zweiten Eingang (258) zum Empfang eines in der ersten Kette (250) demodulierten Signalstoßes umfasst, und dadurch, dass das Mittel zur Auswahl (256) geeignet ist, für jeden erhaltenen Signalstoß einen der Empfangseingänge (258, 260) entsprechend dem Kollisionszustand des Signalstoßes einer vorhandenen oder einer fehlenden Kollision mit einem anderen Signalstoß zu wählen.

17. Nutzlast nach Anspruch 16, **dadurch gekennzeichnet, dass** das Mittel zur Auswahl (256) geeignet ist, die erste Kette (250) zu wählen, wenn der Signalstoß frei von Kollision ist, und die zweite Kette (252) zu wählen, wenn der Signalstoß eine Kollision mit einem anderen Signalstoß erlitten hat.

18. Nutzlast nach einem der Ansprüche 1 bis 5, **dadurch gekennzeichnet, dass** die zweite Kette (92, 252) geeignet ist, alle empfangenen Signalstöße an den Boden zurückzusenden, ohne sie demoduliert zu haben, einschließlich der Signalstöße, die den erfolgreich durch die erste Kette demodulierten Signalstößen entsprechen.

19. Satellitensystem, integriert in ein System zur Meeresnavigation am Boden vom Typ AIS, das dazu bestimmt ist, Seefahrtwege von Seefahrzeugen zu überwachen, das umfasst:
eine Konstellation von umlaufenden Satelliten (4), wobei jeder Satellit (4) eine Nutzlast (42, 242) gemäß einem der Ansprüche 1 bis 18 umfasst,
mindestens zwei AIS-Sender, von denen sich jeder an Bord eines verschiedenen Seefahrzeuges (8, 10, 12) befindet,
eine erste Satellitenbodenstation (14), die geeignet ist, die an Bord der Satelliten (4) nicht demodulierten und von mindestens einem Satelliten (4) ausgesendeten Signalstöße zu empfangen, und die nicht demodulierten Signalstöße in AIS-Nutzdaten zu demodulieren, um die Fahrtwege von Seefahrzeugen (8, 10, 12) zu verfolgen, die Nutzdaten entsprechen, die von der Satellitenbodenstation (14) demoduliert wurden,
mindestens eine zweite lokale Satellitenstation (18, 19) zur Überwachung, die geeignet ist, die an Bord der Satelliten (4) demodulierten und unmittelbar zurückgesendeten Signalstöße zu empfangen.

20. Verarbeitungsverfahren, ausgeführt in einem nach Anspruch 19 definierten Satellitensystem, das die Schritte umfasst, bestehend in:
dem Empfang (204) an einem Satelliten von AIS-Signalen, die für das Meeressystem am Boden charakteristisch sind und in Form von Signalstößen von Seefahrzeugen (8, 10, 12) ausgesendet werden, wobei jeder an dem Satelliten (4) empfangene Signalstoß eine fehlende oder eine vorhandene Kollision mit einem oder mehreren anderen Signalstößen aufweist,
der Demodulierung (206), entlang einer ersten Übertragungskette (90), von jedem empfangenen Signalstoß in überwachende Nutzdaten und Rücksendung der Nutzdaten an den Boden,
**dadurch gekennzeichnet, dass** es die Schritte umfasst, bestehend in
der Rücksendung der empfangenen AIS-Signalstöße, ohne sie zu demodulieren, an eine Bodenstation (14) entlang einer zweiten Kette (92),
dem Empfang durch eine Bodenstation der nicht demodulierten Signalstöße und deren zeitversetzte Verarbeitung am Boden, um sie zu demodulieren.

21. Verfahren nach Anspruch 20, **dadurch gekennzeichnet, dass** es den Schritt umfasst, bestehend in:
der Aktivierung der Weiterleitung der Signalstöße in der zweiten Kette von nicht demodulierten Signalstößen, wenn die Signalstöße durch Kollision mit anderen Signalstößen beeinträchtigt wurden.

22. Verfahren nach Anspruch 20, in welchem das Mittel zur Aktivierung der Weiterleitung das Mittel zur Auswahl (256) ist, und **dadurch gekennzeichnet, dass** es den Schritt umfasst, bestehend in
der Wahl durch das Mittel zur Auswahl (256), für jeden empfangenen Signalstoß, des Ausgangs (258, 260) einer der zwei Übertragungsketten (250, 252) entsprechend dem Kollisionszustand des Signalstoßes einer vorhandenen oder einer fehlenden Kollision mit einem anderen Signalstoß,
Rücksendung der besagten Nutzdaten an den Boden, wenn der Ausgang (258) der ersten Kette (250) ausgewählt wird, oder Rücksendung durch die zweite Kette (252) der Signalstöße ohne sie demoduliert zu haben, wenn der Ausgang (260) der zweiten Kette (252) ausgewählt wird.

## Claims

1. Payload of a satellite (2) for monitoring marine routes of vessel capable of receiving AIS signals, suited for a ground marine navigation system AIS, and transmitted as bursts from vessels (8, 10, 12) on the sea comprising:
a first chain of transmission (90, 250) capable of demodulating each received burst into useful monitoring data and of retransmitting said useful data to the ground,
each received burst having an absence or a presence of collision with one or more other bursts,
**characterised in that**
the payload (42, 242) comprises a second chain of transmission (92, 252) capable of receiving the same AIS signals as the first channel (90, 250) and capable of retransmitting the received bursts to the ground without having demodulated them;
**in that** the second chain of transmission (92, 252) comprises a means for activating the transit (106, 256) of bursts received in the second chain (92, 252), the means of activation (106, 256) having a burst reception input (108, 260) and an activation command input (110), which is capable of enabling transit through the second chain (92, 252) of a burst received at the reception input (108, 260) based on an input signal provided at the activation control input (110), the input signal being representative of the state of collision of the burst included in the presence or absence of collision with another burst; and
**in that** the means of activation (106, 256) is capable of activating transit through the second chain (92) of a burst received when the burst is tainted with collisions or has a strong probability greater than a pre-determined threshold of being tainted with collisions.

2. Payload according to claim 1, **characterised in that** the first chain of transmission (90, 250) is capable of demodulating collision-free bursts and then immediately re-transmitting them to the ground.

3. Payload according to any one of the claims 1 to 2, **characterised in that** the first chain of transmission is capable of immediately re-transmitting the demodulated collision-free bursts to local stations (18, 19) when at least one local station (18, 19) is visible from the satellite.

4. Payload according to any one of the claims 1 to 3, **characterised in that** the first chain of transmission (90, 250) is capable of successfully extracting, for a given demodulated burst, information on the location of the transmitter of the demodulated burst, determining a local station (18; 19) for connecting the transmitter (8, 10; 12) and immediately re-transmitting the demodulated burst to the local station (18; 19), when the local station (18; 19) is visible from the satellite (4).

5. Payload according to any one of the claims 1 to 4, **characterised in that** it comprises a means for identifying (98) the local zone and/or a related local station, and means (99) for detecting the visibility of a local station and triggering the retransmission of at least one demodulated AIS burst to the ground.

6. Payload according to any one of the claims 1 to 5, **characterised in that** the payload (42, 242) comprises a means of determination (97) of the state of collision connected to the input (110) of the means of activation (106, 256).

7. Payload according to claim 6, **characterised in that** the means of determination (97) is capable of indicating to the means of activation (106) that the burst is collision-free when the satellite (4) indicates that it is flying over a coverage area (26) with qualified pre-determined reception with sparse AIS transmitters and that the burst is tainted with a collision when the satellite (4) is flying over a coverage area (26) with qualified pre-determined reception unlike a coverage area with dense AIS transmitters.

8. Payload according to claim 6, **characterised in that** the first chain (90, 250) comprises a means of detecting (152) the success or failure of the demodulation of the burst connected to the means of determination (97) and **in that** when the demodulation of a burst is unsuccessful in the first chain (90, 250), the payload is capable of re-transmitting the same non-demodulated burst to the ground in the second chain (92, 252).

9. Payload according to claim 8, **characterised in that** the means of determination (97) is capable of enabling the means of detection (152) to successfully demodulate the burst when only the satellite (4) indicates that it is flying over a coverage area (26) with qualified pre-determined reception with sparse AIS transmitters unlike a coverage area with dense AIS transmitters.

10. Payload according to any one of the claims 8 to 9, **characterised in that** the device for detecting (152) the success of the demodulation is a detection device a priori, the output whereof depends on the parameters of an estimation of the transmission channel upstream of a demodulator (102).

11. Payload according to any one of the claims 8 to 9, **characterised in that** the device for detecting (152) the success of the demodulation is a detection device a posteriori, the output whereof depends on the demodulated data comprising the sequence of a data integrity detection code and/or a sequence of pre-determined data known a priori.

12. Payload according to any one of the claims 6 to 11, **characterised in that** when the state of collision is declared to be collision-free by the means of determination (97) and **in that** the demodulation of the burst in the first chain (90, 250) is unsuccessful, the payload is also capable of inhibiting the burst on the first chain (90, 250) such that none of the demodulated data corresponding to this burst is re-transmitted.

13. Payload of a satellite according to any one of the claims 1 to 12, **characterised in that**
the first chain (90, 250) is connected to the first transmitter (94) capable of functioning in a first frequency band,
the means of activating (106) the transit through the second chain (92) is connected to a second transmitter (96) capable of functioning in a second frequency band separate from the first band,
and the means of activating (106) the transit through the second chain (92) comprises a mass memory buffer (116) capable of recording the non-modulated bursts received as useful data when it receives a writing activation command signal representing the state of collision of the burst with another burst.

14. Payload according to claim 13, **characterised in that** the first band is included in the band L, X, C, Ku, Ka and **in that** the second band is included in one of the bands S, X, C, Ku and Ka.

15. Payload of a satellite according to any one of the claims 1 to 12, **characterised in that**
the payload (242) comprises a single transmitter (96) connected at its input to the means of activation (256),
the means of activating (256) the transit in the second chain (252) is a means of selecting (256) a chain from the two chains (250, 252) and **in that**
the means of selection (256) is capable of selecting one of the two chains (250, 252) for each burst depending on the state of collision of the burst from among the presence or absence of collision with another burst.

16. Payload according to claim 15, **characterised in that** the means of selection (256) comprises a second inlet (258) for receiving a demodulated burst in the first chain (250) and **in that** the means of selection (256) is capable of selecting one of the receiving inlets (258, 260) for each burst depending on the state of collision of the burst from among the presence or absence of collision with another burst.

17. Payload according to claim 16, **characterised in that** the means of selection (256) is capable of selecting the first chain (250) when the burst is collision-free and the second chain (252) when the burst has collided with another burst.

18. Payload according to any one of the claims 1 to 5, **characterised in that** the second chain (92, 252) is capable of re-transmitting all the bursts received to the ground without demodulating them, including bursts corresponding to bursts demodulated successfully by the first chain.

19. Satellite system integrated in an AIS-type ground maritime navigation system for monitoring marine shipping routes comprising:
a constellation of moving satellites (4), each satellite (4) having a payload (42, 242) that complies with one of the claims 1 to 18,
with at least two AIS transmitters, each on board a different ship (8,10,12),
a first ground satellite station (14) capable of receiving non-demodulated bursts on board satellites (4) and transmitted from at least one satellite (4), and demodulating non-demodulated bursts as useful AIS data for monitoring the routes of ships (8, 10, 12) corresponding to useful data demodulated by the ground satellite station (14),
at least one second local satellite monitoring station (18, 19) capable of receiving demodulated bursts on board satellites (4) and re-transmitted immediately.

20. Processing method implemented in a satellite system defined according to the claim 19 comprising the steps consisting of:
receiving (204) AIS signals specific to the marine system to the ground at the satellite level and transmitted in the form of bursts from ships (8, 10, 12), each burst received at the satellite level (4) having an absence or presence of collision with one or more other bursts,
following a first chain of transmission (90), demodulating (206) each received burst as useful data for monitoring and re-transmitting useful data to the ground,
**characterised in that** it includes
steps consisting of re-transmitting the AIS bursts received without demodulating them following a second chain (92) to a ground station (14),
receiving non-demodulated bursts through a ground station and processing them on ground in deferred time to demodulate them.

21. Method according to claim 20, **characterised in that**
it includes the step consisting of enabling the transit of the bursts into the second chain of non-demodulated bursts when the bursts have collided with other bursts.

22. Method according to claim 20 in which the means for activating the transit is the means of selection (256) and **characterised in that** it includes
the step consisting of selecting the output of one of the two chains of transmission (250, 252) using the means of selection (256) for each burst received (258, 260) depending on the state of collision of the burst from among the presence or absence of collision with another burst,
re-transmitting said useful data to the ground if the output (258) of the first chain (250) is selected or re-transmit the bursts through the second chain (252) without having demodulated them if the output (260) of the second chain (252) is selected.
